# EUROPÄISCHE PATENTSCHRIFT

(11) **EP 4 291 382 B1**
(45) Veröffentlichungstag und Bekanntmachung des Hinweises auf die Patenterteilung: **18.06.2025**
(21) Anmeldenummer: 22708409.2
(22) Anmeldetag: 04.02.2022
(51) Int. Cl.: B29C 55/16, B29C 55/02, B29C 55/20

(54) **VERFAHREN UND VORRICHTUNG ZUM RECKEN VON KUNSTSTOFFFOLIEN**
METHOD AND APPARATUS FOR STRETCHING PLASTIC FILMS
PROCÉDÉ ET APPAREIL POUR ÉTIRER DES FILMS PLASTIQUES

(30) Priorität: 11.02.2021 DE 102021000710
(43) Veröffentlichungstag der Anmeldung: 20.12.2023
(73) Patentinhaber: BB Engineering GmbH, 42897 Remscheid (DE)
(72) Erfinder: SCHÄFER, Klaus, 42897 Remscheid (DE)
(74) Vertreter: Neumann, Ditmar
(86) Internationale Anmeldenummer: PCT/EP2022/052677
(87) Internationale Veröffentlichungsnummer: WO 2022/171532

(56) Entgegenhaltungen:
- WO-A1-2014/094803
- US-A- 4 076 785

## Beschreibung

Die Erfindung betrifft ein Verfahren zum Recken von Kunststofffolien gemäß dem Oberbegriff des Anspruchs 1 sowie eine Vorrichtung zum Recken von Kunststofffolien gemäß dem Oberbegriff des Anspruchs 9.

Ein gattungsgemäßes Verfahren sowie eine gattungsgemäße Vorrichtung zum Recken von Kunststofffolien ist beispielsweise aus der WO 2014/094803 A1 bekannt.

Ein Verfahren zur Herstellung von in der Breite gestreckten Flachfolienbahnen aus thermoplastischen Kunststoffen, insbesondere aus Polyestern oder Polypropylen ist aus der US 4 076 785 A bekannt.

Bei der Herstellung von Kunststofffolien ist es bekannt, dass die mechanischen Eigenschaften wie beispielsweise die Biegsamkeit, die spezifische Festigkeit und die Dehnbarkeit durch eine Materialreckung beeinflusst werden. So lässt sich durch ein Recken der Kunststofffolie die molekulare Struktur des Kunststoffmaterials verändern. Durch beispielsweise gleichzeitige Längs- und Querreckung ordnen sich die Moleküle zu einem Gitterwerk, wodurch die mechanischen Eigenschaften positiv verändert werden. So ist es weiter bekannt, das Längsrecken einer Kunststofffolie und das Querrecken einer Kunststofffolie nacheinander oder simultan durchzuführen. Insbesondere für das Querrecken ist es erforderlich, dass die Kunststofffolie an gegenüberliegenden Längsseiten durch Haltemittel fixiert wird, die dann zu beiden Seiten der Kunststofffolie über Antriebssysteme in Streckbahnen geführt werden.

Ein derartiges Verfahren und eine derartige Vorrichtung sind in der WO 2014/094803 A1 offenbart. Als Haltemittel werden hierbei sogenannte Spannkluppen verwendet, die über einen umlaufenden Kettenantrieb entlang einer Streckbahn geführt werden. Derartige Streckbahnen können sich dabei über eine Länge von beispielsweise 70 m erstrecken, um bestimmte Folienqualitäten und Folienbreiten von beispielsweise 10 m zu erhalten. Dabei ist es erforderlich, dass die Kunststofffolie auf eine vorbestimme gewünschte Recktemperatur erwärmt ist. Somit sind sehr komplexe und großräumige Einrichtungen erforderlich, um die Kunststofffolien zu recken. Darüber hinaus ist aufgrund der dementsprechend lang ausgeführten Antriebssysteme die Produktionsgeschwindigkeit begrenzt.

Es ist nun Aufgabe der Erfindung, das gattungsgemäße Verfahren und die gattungsgemäße Vorrichtung zum Recken von Kunststofffolien derart weiterzubilden, dass eine höhere Produktionsleistung zur Herstellung von Kunststofffolien möglich ist.

Ein weiteres Ziel der Erfindung liegt darin, ein Verfahren und eine Vorrichtung zum Recken von Kunststofffolien bereitzustellen, mit welchem bzw. mit welcher raumsparende und kompakte Herstellungsprozesse realisierbar sind.

Diese Aufgabe wird erfindungsgemäß für ein Verfahren dadurch gelöst, dass mehrere Kunststofffolien mit Abstand übereinander durch die Haltemittel gehalten sind und gleichzeitig gereckt werden.

Für die erfindungsgemäße Vorrichtung ergibt sich die Lösung dadurch, dass die Haltemittel in ihrer Anzahl und / oder in ihrer Ausführung derart ausgebildet sind, dass mehrere Kunststofffolien mit Abstand übereinander gleichzeitig reckbar sind.

Vorteilhafte Weiterbildungen der Erfindung sind durch die Merkmale und Merkmalskombinationen der jeweiligen Unteransprüche definiert.

Unter dem Begriff "Recken" wird hierin das Strecken über die Elastizitätsgrenze hinaus verstanden. Nicht jedes Strecken ist also ein Recken. Das Recken kann ein Quer- und/oder Längsrecken sein. Beim Querrecken wird die Folie in einer Richtung quer zur Bewegungsrichtung gereckt. Beim Längsrecken wird die Folie in einer Richtung parallel zur Bewegungsrichtung gereckt. Beim Quer- und Längsrecken erfolgt eine Überlagerung dieser beiden Reck-Vorgänge. Durch das Recken können Eigenschaften wie beispielsweise die Biegsamkeit, die spezifische Festigkeit und die Dehnbarkeit beeinflusst werden. Durch das Recken wird die molekulare Struktur des Materials der Folie verändert. Durch beispielsweise gleichzeitige Längs- und Querreckung ordnen sich die Moleküle zu einem Gitterwerk, wodurch die mechanischen Eigenschaften positiv verändert werden.

Die Erfindung löst sich von dem Vorbehalt, dass flache Kunststofffolien zur Herstellung gewünschter physikalischer Eigenschaften in einer Behandlungsebene zu führen sind, um über die gesamte Fläche der Kunststofffolie gleichmäßige Eigenschaften zu erhalten. Dieser Vorbehalt ist in der Fachwelt allgemein bekannt und betrifft nicht nur kontinuierliche Prozesse. Die Erfindung hat erkannt, dass die wesentlichen physikalischen Eigenschaften der Kunststofffolie beim Recken unter thermischer Behandlung erzeugt werden. Somit lassen sich durch das erfindungsgemäße Verfahren und die erfindungsgemäße Vorrichtung mehrere Behandlungsebenen beim Recken realisieren. Hierzu ist jeder der Behandlungsebene eine der Kunststofffolien geführt. Somit lassen sich mehrere Kunststofffolien mit Abstand übereinander durch die Haltemittel halten und gleichzeitig recken. Die Haltemittel können hierbei in ihrer Anzahl oder in ihrer Ausführung entsprechend ausgebildet sein, um mehrere Kunststofffolien mit Abstand übereinander gleichzeitig in den Behandlungsebenen zu führen. Die Behandlungsebenen erstrecken sich dabei vorzugsweise parallel zueinander.

Es hat sich als besonders vorteilhaft herausgestellt, wenn auf jeder Seite jeder der Kunststofffolien jeweils mindestens fünf, insbesondere mindestens zehn Haltemittel vorgesehen sind. Pro Streckbahn sind jeweils vorzugsweise mindestens zehn Haltemittel, insbesondere mindestens 20 Haltemittel vorgesehen.

Die Haltemittel sind körperliche Objekte, welche mit der Kunststofffolie in Kontakt gebracht werden können. Beispielsweise kann ein Haltemittel als ein Block, eine Rippe, ein Balken oder eine Stange ausgebildet sein. Die einzelnen Haltemittel sind räumlich voneinander getrennt. Die Haltemittel bewirken, dass die Kunststofffolien jeweils nicht nur an einer einzigen durchgehenden Kontaktfläche gehalten werden.

Die Verfahrensvariante, bei welcher die Kunststofffolien durch Teilung einer Mutterfolie in einem kontinuierlichen Extrusionsprozess gebildet und gereckt werden, ist besonders vorteilhaft, um kurze und kompakte Streckzonen zum Recken der Kunststofffolien zu erhalten. So lassen sich beispielsweise bereits durch eine einfache Teilung der Mutterfolie die Streckbreiten halbieren, um die gleichen physikalischen Eigenschaften mit den herkömmlichen Folien zu erhalten.

Hierzu ist die erfindungsgemäße Weiterbildung der Vorrichtung besonders vorteilhaft, bei welcher eine Extrusionsvorrichtung zur Herstellung einer Mutterfolie und eine Schneideinrichtung vorgesehen sind, durch welche eine Mutterfolie in mehrere Kunststofffolien teilbar und den Haltemitteln zuführbar sind. So lassen sich mehrere Kunststofffolien aus einer Mutterfolie gemeinsam recken. Der Extrusionsvorrichtung ist ein Schmelzerzeuger in Form eines Extruders oder einer Polykondensationsanlage vorgeordnet.

Die Verfahrensvariante, bei welcher die Kunststofffolien separat extrudiert und zum Recken mit Abstand übereinander zusammengeführt werden, ist bevorzugt angewendet, um möglichst hohe Produktionsleistungen bei der Herstellung von Folien zu erreichen. So können direkt mehrere frisch extrudierte Kunststofffolien gemeinsam in einer Reckanlage längs- und / oder quergereckt werden.

Hierfür ist die Weiterbildung der erfindungsgemäßen Vorrichtung bevorzugt eingesetzt, bei welcher mehrere Extrusionsvorrichtungen zur Herstellung mehrerer Kunststofffolien vorgesehen sind, welche Kunststofffolien den Haltemitteln zuführbar sind. Den Extrusionsvorrichtungen können mehrere Schmelzerzeuger oder nur ein gemeinsamer Schmelzerzeuger vorgeordnet sein.

In welcher Art und Weise die an den Haltemitteln geführten Kunststofffolien gereckt werden, ist von der Ausführung der Streckbahnen sowie dem Antriebssystem der Haltemittel abhängig. Insoweit ermöglicht die Verfahrensvariante, bei welcher die Kunststofffolien durch Bewegung der Haltemittel der entlang der Streckbahnen längs- und / oder quergereckt werden, flexible Einstellungsmöglichkeiten. Bevorzugt werden die Kunststofffolien simultan mit einer Längs- und Querreckung hergestellt.

Hierzu weisen die Streckbahnen mehrere Streckenabschnitte zur Führung der Haltemittel auf, wobei zumindest einer der Streckenabschnitte eine Längsreckung der Kunststofffolie und / oder eine Querreckung der Kunststofffolie bewirkt.

Um möglichst an allen Kunststofffolien identische physikalische Eigenschaften zu erhalten, ist die Verfahrensvariante bevorzugt ausgeführt, bei welcher die Kunststofffolien durch Bewegung der Haltemittel entlang der Streckbahnen synchron gereckt werden. Damit lässt sich sicherstellen, dass jeder der Behandlungsebene gleiche Streckkräfte durch die Haltemittel erzeugt werden.

Hierzu werden die Haltemittel in beiden Streckbahnen durch separate Antriebssysteme synchron geführt.

Eine Temperierung der Kunststofffolie lässt sich durch die Verfahrensvariante gewährleisten, bei welchem die Kunststofffolie innerhalb eines Ofens gereckt werden. Hierzu sind die Streckbahnen zumindest teilweise innerhalb eines Ofens angeordnet, so dass die gewünschten Teilabschnitte der Kunststofffolien vor dem Recken, bei dem Recken oder nach dem Recken thermisch behandelbar sind.

Die in den Behandlungsebenen übereinander geführten Kunststofffolien werden bevorzugt mit den an einer der Längsseiten der Kunststofffolien zugeordneten Haltemittel gemeinsam durch ein Antriebssystem entlang der betreffenden Streckbahn geführt.

Alternativ besteht jedoch auch die Möglichkeit, dass die Längsseiten der Kunststofffolien durch separate Haltemittel pro Kunststofffolie gehalten sind. So können beispielsweise durch zusätzlich getrennte Antriebssysteme der Haltemittel die Kunststofffolien in den Behandlungsebenen mit unterschiedlichen Einstellungen in der Geschwindigkeit gereckt werden.

Um mit möglichst geringem apparativem Aufwand mehrere Kunststofffolien zu recken, ist die Weiterbildung der erfindungsgemäßen Vorrichtung besonders vorteilhaft, bei welcher die in einer der Streckbahnen geführten Haltemittel mehrere Klemmstellen übereinander aufweisen. So lassen sich pro Klemmstelle jeweils eine Kunststofffolie an dem Haltemittel fixieren.

Alternativ besteht jedoch auch die Möglichkeit, dass die in einer der Streckbahnen geführten Haltemittel abwechselnd untere und obere Klemmstellen aufweisen. So kann jeder der Kunststofffolien separate Haltemittel zur Fixierung zugeordnet sein.

Das erfindungsgemäße Verfahren und die erfindungsgemäße Vorrichtung zum Recken von Kunststofffolien lässt sich vorteilhaft zum gleichzeitigen Recken von mehreren Kunststofffolien insbesondere Flachfolien einsetzen. Bevorzugt werden zwei oder drei übereinander angeordnete Kunststofffolien beispielsweise aus einem Polyester oder Polyolefin simultan gereckt.

Zur weiteren Erläuterung der Erfindung werden nachfolgend einige Ausführungsbeispiele der erfindungsgemäßen Vorrichtung zum Recken von Kunststofffolien unter Bezug auf die beigefügten Figuren näher erläutert.

Es stellen dar:
- Fig. 1: eine schematische Seitenansicht eines ersten Ausführungsbeispiels der erfindungsgemäßen Vorrichtung zum Recken von Kunststofffolien
- Fig. 2: eine schematische Draufsicht des Ausführungsbeispiels aus Fig. 1
- Fig. 3: eine schematische Draufsicht eines weiteren Ausführungsbeispiels der erfindungsgemäßen Vorrichtung zum Recken von Kunststofffolien
- Fig. 4.1 und Fig. 4.2: schematisch mehrere Ausführungsbeispiele von Haltemitteln zum Fixieren mehreren Kunststofffolien

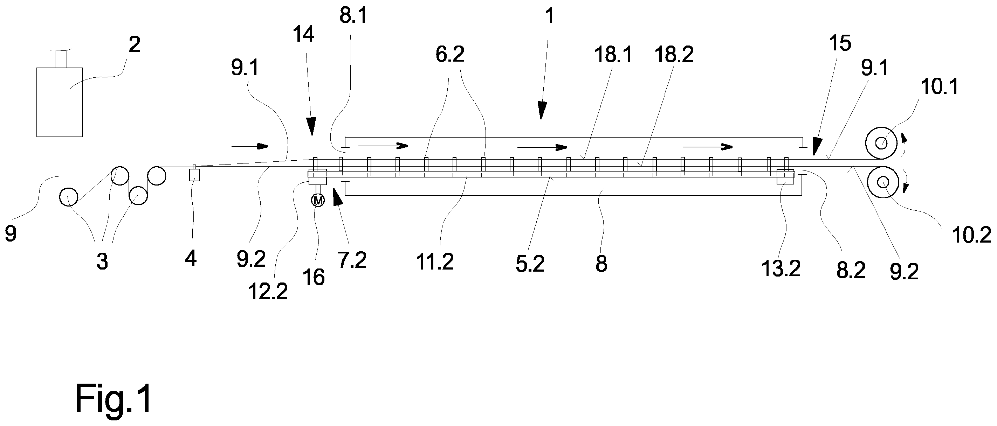

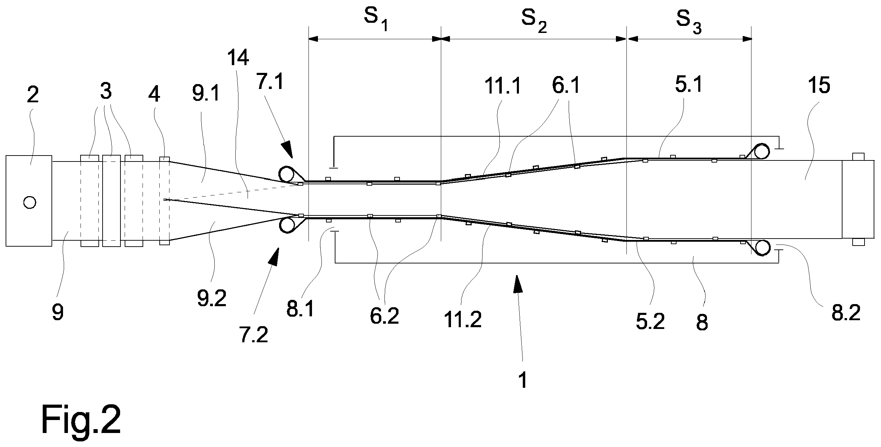

In der Fig. 1 und Fig. 2 ist ein erstes Ausführungsbeispiel der erfindungsgemäßen Vorrichtung zum Recken von Kunststofffolien schematisch in mehreren Ansichten dargestellt. In Fig. 1 ist eine schematische Darstellung einer Seitenansicht und in Fig. 2 eine schematische Darstellung einer Draufsicht der erfindungsgemäßen Vorrichtung zum Recken von Kunststofffolien gezeigt. Insoweit kein ausdrücklicher Bezug zu einer der Figuren gemacht ist, gilt die nachfolgende Beschreibung für beide Figuren.

Das Ausführungsbeispiel der erfindungsgemäßen Vorrichtung ist hier mit dem Bezugszeichen 1 als Reckvorrichtung bezeichnet. Hierbei sind nur die für die Erfindung wesentlichen Bauteile einer derartige Reckvorrichtung 1 schematisch dargestellt. Die hier nicht dargestellten Bauteile der Reckvorrichtung 1 sind hinlänglich im Stand der Technik bekannt und daher hier nicht beschrieben.

Die Reckvorrichtung 1 weist zwei langgestreckte und symmetrisch zueinander angeordnete Streckbahnen 5.1 und 5.2 auf. Die Streckbahnen 5.1 und 5.2 sind an einem hier nicht dargestellten Trägergestell gehalten und weisen üblicherweise ein Führungsschienensystem zur Führung einer Vielzahl von Haltemitteln 6, 6.1 und 6.2 auf, die nachfolgend noch näher erläutert werden.

Wie insbesondere aus der Darstellung in Fig. 2 hervorgeht, sind die Streckbahnen 5.1 und 5.2 symmetrisch zueinander angeordnet und bilden zwischen sich mehrere Streckenabschnitte, die in Fig. 2 mit dem Bezugszeichen S₁, S₂ und S₃ gekennzeichnet sind. In dem Streckenabschnitt S₁ sind die Streckbahnen 5.1 und 5.2 parallel zueinander angeordnet. In dem Streckenabschnitt S₂ sind die Streckbahnen 5.1 und 5.2 V-förmig zueinander ausgerichtet, um dann im Streckenabschnitt S₃ wieder parallel zueinander zu verlaufen. Die Streckenbahnen 5.1 und 5.2 schließen hierbei mehrere Behandlungsebenen zum Führen und Recken von Kunststofffolien ein.

Die zur Führung und Fixierung der Kunststofffolien vorgesehenen Haltemittel 6.1 und 6.2 werden durch jeweils ein Antriebssystem 7.1 und 7.2 angetrieben. Hierzu sind die Haltemittel 6.1 und 6.2 an jeweils einem Zugmittel 11.1 und 11.2 angeordnet. Das Zugmittel 11.1 und 11.2 kann hierbei jeweils durch eine umlaufende Kette, Riemen oder Wand gebildet sein, an welchem die Haltemittel 6.1 und 6.2 in Abstand zueinander angeordnet sind. Die Haltemittel 6.1 und 6.2 stehen sich symmetrisch in den Streckbahnen 5.1 und 5.2 gegenüber, um Ränder der Kunststofffolien anderer Längsseiten fixieren zu können.

Wie aus der Darstellung in Fig. 1 hervorgeht, wird das Zugmittel 11.2 an einem Einlauf 14 durch ein Antriebsrad 12.2 umgelenkt. An einem gegenüberliegenden Auslauf 15 wird das Zugmittel 11.2 durch ein Umlenkrad 13.1 geführt. Das Antriebsrad 12.1 wird durch einen Elektromotor 16 angetrieben.

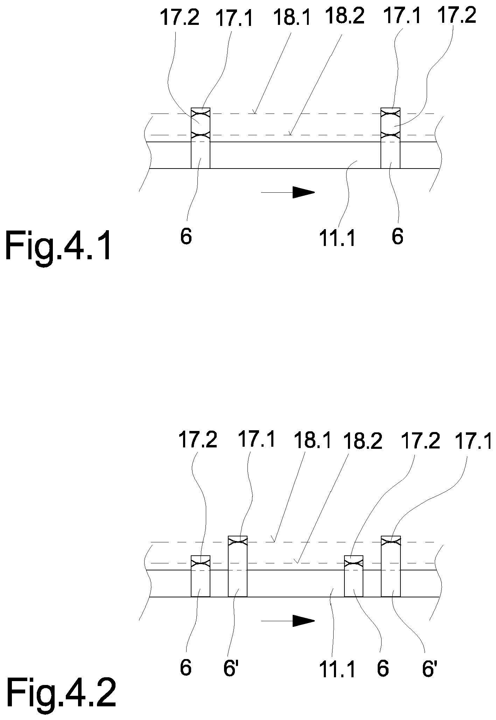

Die durch die Zugmittel 11.1 und 11.2 geführten Haltemittel 6.1 und 6.2 weisen eine oder mehrere Klemmstellen zum Erfassen der Kunststofffolien auf. Hierzu sind in Fig. 4.1 und 4.2 mögliche Varianten der Haltemittel 6.1 und 6.2 zur Aufnahme und Fixierung der Kunststofffolie schematisch dargestellt.

In der Fig. 4.1 ist eine erste Variante der Haltemittel 6.1 dargestellt. Hierbei weist jedes der Haltemittel 6.1 eine obere Klemmstelle 17.1 und eine untere Klemmstelle 17.2 auf. In jede der Klemmstelle 17.1 und 17.2 lässt sich der Rand einer Folienbahn an ihren Längsseiten fixieren. So können zwei Kunststofffolien übereinander durch die Haltemittel 6.1 synchron geführt werden. Die oberen Klemmstellen 17.1 bilden dabei eine obere Behandlungsebene 18.1 für eine erste Kunststofffolie. Die unteren Klemmstellen 17.2 an den Haltemitteln 6.1 bilden eine untere Behandlungsebene 18.2 für eine zweite Kunststofffolie. Hierbei lassen sich die Kunststofffolie in der oberen Behandlungsebene 18.1 und in der unteren Behandlungsebene 18.2 mit Abstand parallel zueinander durch die Haltemittel 6.1 führen. Die Haltemittel 6.1 sind hierzu an dem Zugmittel 11.1 befestigt. Die dem Zugmittel 11.2 zugeordneten Haltemittel 6.2 sind identisch ausgeführt und nur spiegelsymmetrisch zu den Haltemitteln 6.1 angeordnet.

In der Fig. 4.2 ist eine alternative Ausführung der Haltemittel 6.1 dargestellt. Hierbei sind zwei Gruppen von Haltemitteln 6.1 und 6.1' an dem Zugmittel 11.1 befestigt. Eine erste Gruppe der Haltemittel 6.1 weist eine untere Klemmstelle 17.2 auf. Ein direkt benachbartes Haltemittel 6.1' weist eine obere Klemmstelle 17.1 auf. So wird die obere Behandlungsebene 18.1 durch die Haltemittel 6.1' gebildet. Die untere Behandlungsebene 18.2 wird durch die Haltemittel 6.1 aufgespannt. In jede Klemmstellen 17.1 und 17.2 können somit zwei Kunststofffolien geführt werden.

Für den Fall, dass die Haltemittel 6.1 und 6.1' gemeinsam an einem Zugmittel 11.1 angeordnet sind, lassen sich die jeweils eingespannten und fixierten Kunststofffolien synchron führen. Für den Fall, dass die Haltemittel 6.1 und 6.1' jeweils an separaten Zugmitteln gehalten sind, besteht auch die Möglichkeit, die Kunststofffolien in der unteren Behandlungsebene 18.2 und die Kunststofffolie an der oberen Behandlungsebene 18.1 mit unterschiedlichen Transportgeschwindigkeiten zu führen. Hierzu sind den Haltemitteln 6.1 und 6.1' jeweils separate Antriebssysteme zugeordnet.

Wie aus der Darstellung in den Fig. 1 und 2 hervorgeht, sind die Streckbahnen 5.1 bis 5.2 zum größten Teil innerhalb eines Ofens 8 angeordnet. Der Ofen 8 weist mit Abstand zu einem Einlauf 14 einen Einlass 8.1 auf. Am gegenüberliegenden Ende wird der Auslauf 15 mit dem Auslass 8.2 des Ofens 8 gebildet. Der Ofen 8 weist hier nicht dargestellte Heizmittel auf, um beispielsweise durch eine erwärmte Luft eine Temperierung der Kunststofffolien zu ermöglichen.

Bei dem in Fig. 1 und 2 dargestellten Ausführungsbeispiel ist der Reckvorrichtung 1 eine Extrusionsvorrichtung 2 vorgeordnet. Die Extrusionsvorrichtung 2 weist an seiner Unterseite eine Extrusionsdüse auf, um aus einer zugeführten Polymerschmelze beispielsweise einem Polyester oder Polyolefin einer Flachfolie zu extrudieren. Die Schmelze könnte hierbei durch einen Extruder oder direkt durch eine Polykondensation erzeugt werden, die der Extrusionsvorrichtung 2 vorgeordnet wären. Der Extrusionsvorrichtung 2 sind mehrere Führungswalzen 3 nachgeordnet, um eine Mutterfolie abzuziehen und ggf. in ihrer Länge zu verstrecken. Zwischen der Reckvorrichtung 1 und den Führungswalzen 3 ist eine Schneideinrichtung 4 angeordnet.

Wie aus der Darstellung in Fig. 2 hervorgeht, wird durch die Schneideinrichtung 4 die Mutterfolie 9 in zwei Kunststofffolien 9.1 und 9.2 geteilt. Die aus der Mutterfolie 9 gebildeten Kunststofffolie 9.1 und 9.2 werden am Einlauf 14 der Reckvorrichtung 1 den Haltemitteln 6.1 und 6.2 zugeführt und mit Abstand übereinander in den betreffenden Klemmstellen der Haltemittel 6.1 und 6.2 erfasst und geklemmt. Das Öffnen und Schließen der Klemmstellen in den Haltemitteln 6.1 und 6.2 erfolgt üblicherweise selbsttätig durch mechanische Spannmittel.

In den Fig. 1 und 2 ist die Reckvorrichtung 1 in einer Betriebssituation dargestellt, in welcher die Kunststofffolien 9.1 und 9.2 im wesentlichen quergereckt werden. Die Kunststofffolien 9.1 und 9.2 werden zunächst in dem Streckenabschnitt S₁ der Streckbahnen 5.1 und 5.2 innerhalb des Ofens 8 auf eine Recktemperatur erwärmt. Im Streckenabschnitt S₂ der Streckbahnen 5.1 und 5.2 erfolgt ein Querrecken der beiden Kunststofffolien 9.1 und 9.2. Die Haltemittel 6 werden durch die zugeordneten Antriebssysteme 7.1 und 7.2 jeweils synchron angetrieben. In dem Streckenabschnitt S₃ der Streckbahnen 5.1 und 5.2 erfolgt eine Nachbehandlung der Kunststofffolien 9.1 und 9.2, um mögliche Spannungen im Material abzubauen.

Anschließend nach dem Recken werden die Kunststofffolien 9.1 und 9.2 einer Behandlungsvorrichtung zugeführt. In diesem Fall sind zwei Aufwickelvorrichtungen 10.1 und 10.2 vorgesehen, um die Kunststofffolien 9.1 und 9.2 getrennt aufzuwickeln. Hierbei sind die physikalischen Eigenschaften an den beiden Kunststofffolien 9.1 und 9.2 im Wesentlichen und gleichmäßig ausgebildet. Am Auslauf 15 der Reckvorrichtung 1 werden die Klemmstellen in den Haltemitteln 6.1 und 6.2 selbsttätig gelöst, so dass die Kunststofffolien 9.1 und 9.2 zum Aufwickeln freigegeben sind. Die Haltemittel 6.1 und 6.2 werden nach Lösen der Kunststofffolien 9.1 und 9.2 durch das Zugmittel 11.1 und 11.2 von dem Auslauf 15 zurück zum Einlauf 14 geführt. Bei dem in Fig. 1 und 2 dargestellten Ausführungsbeispiel ist die Rückführung der Haltemittel 6 innerhalb des Ofens 8 angeordnet. Grundsätzlich besteht jedoch auch die Möglichkeit, die Haltemittel 6 an dem Zugmittel 11.1 und 11.2 außerhalb des Ofens 8 zum Einlauf 14 zurückzuführen.

Das in Fig. 1 und 2 dargestellte Ausführungsbeispiel der erfindungsgemäßen Reckvorrichtung 1 ist in Kombination mit einer Extrusionsvorrichtung 2 besonders geeignet, um in kompakten Anlagen kontinuierliche Herstellungsprozesse für Kunststofffolien zu realisieren. Insbesondere die erfindungsgemäße Reckvorrichtung 1 kann durch die überlagerte Führung von mehreren Kunststofffolien die üblichen Streckbahnen erheblich verkürzen. Insbesondere die Streckenabschnitte zum Recken der Kunststofffolie können bereits bei gleichzeitiger Behandlung von zwei Kunststofffolien halbiert werden.

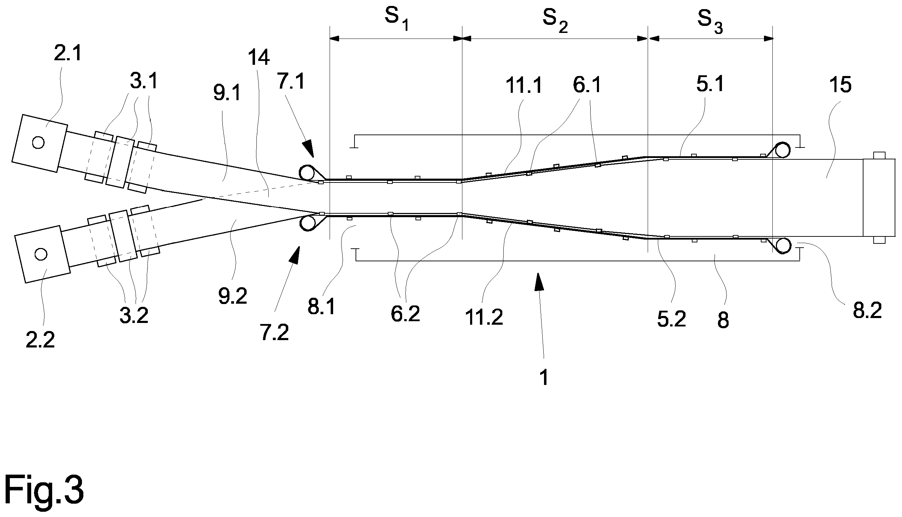

Um möglichst die Produktionsleistung zur Herstellung von Kunststofffolien zu erhöhen, ist in Fig. 3 ein weiteres Ausführungsbeispiel der erfindungsgemäßen Vorrichtung in einer schematischen Draufsicht dargestellt. Bei dem Ausführungsbeispiel nach Fig. 3 ist die Reckvorrichtung 1 identisch zu dem Ausführungsbeispiel nach Fig. 1 und 2, so dass an dieser Stelle Bezug zu der vorgenannten Beschreibung genommen wird und nur die Unterschiede erläutert werden.

Bei dem Ausführungsbeispiel nach Fig. 3 sind der Reckvorrichtung 1 mehrere Extrusionsvorrichtungen 2.1 und 2.2. Jede der Extrusionsvorrichtungen 2.1 und 2.2 erzeugt mittel seiner Flachdüse eine Kunststofffolie 9.1 und 9.2. Die Kunststofffolien werden durch Führungswalzen 3.1 und 3.2 geführt und dem Einlauf 14 der Reckvorrichtung 1 zugeführt. Die Kunststofffolien 9.1 und 9.2 der mit Abstand übereinander am Einlauf 14 der Reckvorrichtung 1 durch die Haltemittel 6.1 und 6.2 erfasst und an den Rändern ihrer Längsseiten durch Klemmung fixiert. Die Führung, die thermische Behandlung und das Querrecken erfolgt an beiden Kunststofffolien 9.1 und 9.2 vorzugsweise synchron. Grundsätzlich besteht jedoch auch die Möglichkeit, durch separate Haltemittel 6.1 und 6.2 gemäß dem Ausführungsbeispiel nach Fig. 4.2 und separate Antriebssysteme 7.1 und7.2 die Kunststofffolien 9.1 und 9.2 mit unterschiedlichen Transportgeschwindigkeiten zu führen, um verschiedene physikalische Eigenschaften in den Kunststofffolien zu erhalten.

Am Ende des Prozesses werden die Kunststofffolie 9.1 und 9.2 in den Aufwickelvorrichtungen 10.1 und 10.2 aufgewickelt.

Bei dem in Fig. 1 bis 3 dargestellten Ausführungsbeispielen ist die Reckvorrichtung 1 in einer Version dargestellt, bei welcher zwei Kunststofffolien mit Abstand übereinander an zwei benachbarten Behandlungsebenen gereckt werden. Grundsätzlich ist die Anzahl der gleichzeitig geführten Folien nicht begrenzt, so dass auch mehrere Folien übereinander innerhalb der Reckvorrichtung 1 führbar sind. Des Weiteren ist die Erfindung nicht auf kontinuierliche Prozesse und auf kontinuierliche arbeitende Reckvorrichtungen beschränkt. Grundsätzlich lassen sich auch Kunststofffolien in Zweistufenprozessen nach dem erfindungsgemäßen Verfahren mit der erfindungsgemäßen Vorrichtung längs- und / oder querrecken. So ist es bekannt, derartige Haltemittel innerhalb eines Reckrahmens anzuordnen, um eine Kunststofffolie zu fixieren und durch Bewegung der Haltemittel zu recken. Durch Verwendung der erfindungsgemäßen Vorrichtung können somit mehrere Kunststofffolien synchron gereckt werden.

## Patentansprüche

1. Verfahren zum Recken von Kunststofffolien (9.1, 9.2), bei welchem eine Kunststofffolie (9.1, 9.2) an zumindest zwei gegenüberliegenden Längsseiten durch eine Mehrzahl von Haltemitteln (6.1, 6.2) gehalten wird und bei welchem die Haltemittel (6.1, 6.2) zu beiden Längsseiten der Kunststofffolie (9.1, 9.2) entlang von Streckbahnen (5.1, 5.2) geführt werden, wobei mehrere Kunststofffolien (9.1, 9.2) mit Abstand übereinander durch die Haltemittel (6.1, 6.2) gehalten sind und gleichzeitig gereckt werden.

2. Verfahren nach Anspruch 1, **dadurch gekennzeichnet, dass** die Kunststofffolien (9.1, 9.2) durch Teilung einer Mutterfolie (9) in einem kontinuierlichen Extrusionsprozess gebildet und gereckt werden.

3. Verfahren nach Anspruch 1, **dadurch gekennzeichnet, dass** die Kunststofffolien (9.1, 9.2) separat extrudiert und zum Recken mit Abstand übereinander zusammengeführt werden.

4. Verfahren nach einem der Ansprüche 1 bis 3, **dadurch gekennzeichnet, dass** die Kunststofffolien (9.1, 9.2) durch Bewegung der Haltemittel (6.1, 6.2) entlang der Streckbahnen (5.1, 5.2) längs und/oder quer gereckt werden.

5. Verfahren nach einem der Ansprüche 1 bis 4, **dadurch gekennzeichnet, dass** die Kunststofffolien (9.1, 9.2) durch Bewegung der Haltemittel (6.1, 6.2) entlang der Streckbahnen (5.1, 5.2) synchron gereckt werden.

6. Verfahren nach einem der Ansprüche 1 bis 5, **dadurch gekennzeichnet, dass** die Kunststofffolien (9.1, 9.2) innerhalb eines Ofens (8) gereckt werden.

7. Verfahren nach einem der Ansprüche 1 bis 6, **dadurch gekennzeichnet, dass** die einer der Längsseiten der Kunststofffolien (9.1, 9.2) zugeordneten Haltemittel (6.1, 6.2) gemeinsam durch ein Antriebssystem (7.1, 7.2) entlang der betreffenden Streckbahn (5.1, 5.2) geführt werden.

8. Verfahren nach einem der Ansprüche 1 bis 7, **dadurch gekennzeichnet, dass** die Längsseiten der Kunststofffolien (9.1, 9.2) durch separate Haltemittel (6.1, 6.2)) pro Kunststofffolie (9.1, 9.2) gehalten sind.

9. Vorrichtung (1) zum Recken von Kunststofffolien mit mehreren Haltemitteln (6.1, 6.2), die in einer symmetrischen Anordnung entlang von Streckbahnen (5.1, 5.2) derart verteilt angeordnet und bewegbar sind, dass eine Kunststofffolie zu beiden Längsseiten führbar ist, **dadurch gekennzeichnet, dass** die Haltemittel (6.1, 6.2) in ihrer Anzahl und/oder in ihrer Ausführung derart ausgebildet sind, dass mehrere Kunststofffolien (9.1, 9.2) mit Abstand übereinander gleichzeitig reckbar sind.

10. Vorrichtung nach Anspruch 9, **dadurch gekennzeichnet, dass** eine Extrusionsvorrichtung (2) zur Herstellung einer Mutterfolie (9) und eine Schneideinrichtung (4) vorgesehen sind, durch welche eine Mutterfolie (9) in mehrere Kunststofffolien (9.1, 9.2) teilbar und den Haltemitteln (6.1, 6.2) zuführbar ist.

11. Vorrichtung nach Anspruch 9, **dadurch gekennzeichnet, dass** mehrere Extrusionsvorrichtungen (2.1, 2.2) zur Herstellung mehrerer Kunststofffolien (9.1, 9.2) vorgesehen sind, welche Kunststofffolien (9.1, 9.2) den Haltemitteln (6.1, 6.2) zuführbar sind.

12. Vorrichtung nach einem der Ansprüche 9 bis 11, **dadurch gekennzeichnet, dass** die Streckbahnen (5.1, 5.2) mehrere Streckenabschnitte (S₁, S₂, S₃) zur Führung der Haltemittel (6.1, 6.2) aufweist und dass zumindest einer der Streckenabschnitte (S₁, S₂, S₃)ein Längsrecken der Kunststofffolien (9.1, 9.2) und/oder ein Querrecken der Kunststofffolien (9.1, 9.2) bewirkt.

13. Vorrichtung nach einem der Ansprüche 9 bis 12, **dadurch gekennzeichnet, dass** die Haltemittel (6.1, 6.2) in beiden Streckbahnen (5.1, 5.2) durch separate Antriebssysteme (7.1, 7.2) synchron geführt sind.

14. Vorrichtung nach einem der Ansprüche 9 bis 13, **dadurch gekennzeichnet, dass** die Streckbahnen (5.1, 5.2) innerhalb eines Ofens (8) angeordnet sind.

15. Vorrichtung nach einem der Ansprüche 9 bis 14, **dadurch gekennzeichnet, dass** die in einer der Streckbahn (5.1, 5.2) geführten Haltemittel (6.1, 6.2) mehrere Klemmstellen (17.1, 17.2) übereinander aufweisen.

16. Vorrichtung nach einem der Ansprüche 9 bis 14, **dadurch gekennzeichnet, dass** die in einer der Streckbahn (5.1, 5.2) geführten Haltemittel (6.1, 6.2) abwechselnd untere und obere Klemmstellen (17.1, 17.2) aufweisen.

## Claims

1. Method for stretching plastic films (9.1, 9.2), in which a plastic film (9.1, 9.2) is held on at least two opposite longitudinal sides by a multiplicity of holding means (6.1, 6.2) and in which the holding means (6.1, 6.2) are guided on both longitudinal sides of the plastic film (9.1, 9.2) along extension paths (5.1, 5.2), wherein a plurality of plastic films (9.1, 9.2) are held at a distance above one another by the holding means (6.1, 6.2) and are simultaneously stretched.

2. Method according to Claim 1, **characterized in that** the plastic films (9.1, 9.2) are formed by dividing a stock film (9) in a continuous extrusion process and are stretched.

3. Method according to Claim 1, **characterized in that** the plastic films (9.1, 9.2) are extruded separately and are combined at a distance above one another for the stretching.

4. Method according to one of Claims 1 to 3, **characterized in that** the plastic films (9.1, 9.2) are stretched longitudinally and/or transversely by moving the holding means (6.1, 6.2) along the extension paths (5.1, 5.2).

5. Method according to one of Claims 1 to 4, **characterized in that** the plastic films (9.1, 9.2) are stretched synchronously by moving the holding means (6.1, 6.2) along the extension paths (5.1, 5.2).

6. Method according to one of Claims 1 to 5, **characterized in that** the plastic films (9.1, 9.2) are stretched inside an oven (8).

7. Method according to one of Claims 1 to 6, **characterized in that** the holding means (6.1, 6.2) assigned to one of the longitudinal sides of the plastic films (9.1, 9.2) are guided together by a drive system (7.1, 7.2) along the relevant extension path (5.1, 5.2).

8. Method according to one of Claims 1 to 7, **characterized in that** the longitudinal sides of the plastic films (9.1, 9.2) are held by separate holding means (6.1, 6.2) for each plastic film (9.1, 9.2).

9. Apparatus (1) for stretching plastic films, having a plurality of holding means (6.1, 6.2), which are arranged distributed in a symmetrical arrangement along extension paths (5.1, 5.2) and are movable in such a way that a plastic film can be guided on both longitudinal sides, **characterized in that** the holding means (6.1, 6.2) are configured in terms of their number and/or their layout in such a way that a plurality of plastic films (9.1, 9.2) can be stretched simultaneously at a distance above one another.

10. Apparatus according to Claim 9, **characterized in that** an extrusion apparatus (2) for producing a stock film (9) and a cutting device (4) are provided, by which a stock film (9) can be divided into a plurality of plastic films (9.1, 9.2) and delivered to the holding means (6.1, 6.2).

11. Apparatus according to Claim 9, **characterized in that** a plurality of extrusion apparatuses (2.1, 2.2) for producing a plurality of plastic films (9.1, 9.2) are provided, which plastic films (9.1, 9.2) can be delivered to the holding means (6.1, 6.2).

12. Apparatus according to one of Claims 9 to 11, **characterized in that** the extension paths (5.1, 5.2) comprise a plurality of path sections (S₁, S₂, S₃) for guiding the holding means (6.1, 6.2), and **in that** at least one of the path sections (S₁, S₂, S₃) causes a longitudinal extension of the plastic films (9.1, 9.2) and/or a transverse extension of the plastic films (9.1, 9.2).

13. Apparatus according to one of Claims 9 to 12, **characterized in that** the holding means (6.1, 6.2) are guided synchronously in the two extension paths (5.1, 5.2) by separate drive systems (7.1, 7.2).

14. Apparatus according to one of Claims 9 to 13, **characterized in that** the extension paths (5.1, 5.2) are arranged inside an oven (8).

15. Apparatus according to one of Claims 9 to 14, **characterized in that** the holding means (6.1, 6.2) guided in one of the extension paths (5.1, 5.2) comprise a plurality of clamping positions (17.1, 17.2) above one another.

16. Apparatus according to one of Claims 9 to 14, **characterized in that** the holding means (6.1, 6.2) guided in one of the extension paths (5.1, 5.2) alternately comprise lower and upper clamping positions (17.1, 17.2).

## Revendications

1. Procédé d'étirage de feuilles en matière plastique (9.1, 9.2), dans lequel une feuille en matière plastique (9.1, 9.2) est maintenue sur au moins deux côtés longitudinaux opposés par une pluralité de moyens de maintien (6.1, 6.2) et dans lequel les moyens de maintien (6.1, 6.2) sont guidés vers les deux côtés longitudinaux de la feuille en matière plastique (9.1, 9.2) le long de voies d'étirage (5.1, 5.2), plusieurs feuilles en matière plastique (9.1, 9.2) étant maintenues à distance les unes au-dessus des autres par les moyens de maintien (6.1, 6.2) et étant étirées simultanément.

2. Procédé selon la revendication 1, **caractérisé en ce que** les feuilles en matière plastique (9.1, 9.2) sont formées et étirées par division d'une feuille mère (9) dans un processus d'extrusion continu.

3. Procédé selon la revendication 1, **caractérisé en ce que** les feuilles en matière plastique (9.1, 9.2) sont extrudées séparément et sont réunies à distance les unes au-dessus des autres pour l'étirage.

4. Procédé selon l'une quelconque des revendications 1 à 3, **caractérisé en ce que** les feuilles en matière plastique (9.1, 9.2) sont étirées longitudinalement et/ou transversalement par déplacement des moyens de maintien (6.1, 6.2) le long des voies d'étirage (5.1, 5.2).

5. Procédé selon l'une quelconque des revendications 1 à 4, **caractérisé en ce que** les feuilles en matière plastique (9.1, 9.2) sont étirées de manière synchrone par déplacement des moyens de maintien (6.1, 6.2) le long des voies d'étirage (5.1, 5.2).

6. Procédé selon l'une quelconque des revendications 1 à 5, **caractérisé en ce que** les feuilles en matière plastique (9.1, 9.2) sont étirées à l'intérieur d'un four (8).

7. Procédé selon l'une quelconque des revendications 1 à 6, **caractérisé en ce que** les moyens de maintien (6.1, 6.2) associés à l'un des côtés longitudinaux des feuilles en matière plastique (9.1, 9.2) sont guidés ensemble par un système d'entraînement (7.1, 7.2) le long de la voie d'étirage (5.1, 5.2) concernée.

8. Procédé selon l'une quelconque des revendications 1 à 7, **caractérisé en ce que** les côtés longitudinaux des feuilles en matière plastique (9.1, 9.2) sont maintenus par des moyens de maintien séparés (6.1, 6.2) par feuille en matière plastique (9.1, 9.2).

9. Dispositif (1) pour l'étirage de feuilles en matière plastique avec plusieurs moyens de maintien (6.1, 6.2) qui sont répartis et peuvent être déplacés dans un agencement symétrique le long de voies d'étirage (5.1, 5.2) de telle sorte qu'une feuille en matière plastique peut être guidée vers les deux côtés longitudinaux, **caractérisé en ce que** les moyens de maintien (6.1, 6.2) sont configurés dans leur nombre et/ou dans leur réalisation de telle sorte que plusieurs feuilles en matière plastique (9.1, 9.2) peuvent être étirées simultanément à distance les unes au-dessus des autres.

10. Dispositif selon la revendication 9, **caractérisé en ce qu'**il est prévu un dispositif d'extrusion (2) pour la fabrication d'une feuille mère (9) et un appareil de coupe (4), par lequel une feuille mère (9) peut être divisée en plusieurs feuilles en matière plastique (9.1, 9.2) et amenée aux moyens de maintien (6.1, 6.2).

11. Dispositif selon la revendication 9, **caractérisé en ce que** plusieurs dispositifs d'extrusion (2.1, 2.2) sont prévus pour la fabrication de plusieurs feuilles en matière plastique (9.1, 9.2), lesquelles feuilles en matière plastique (9.1, 9.2) peuvent être amenées aux moyens de maintien (6.1, 6.2).

12. Dispositif selon l'une quelconque des revendications 9 à 11, **caractérisé en ce que** les voies d'étirage (5.1, 5.2) présentent plusieurs sections de voie (S₁, S₂, S₃) pour le guidage des moyens de maintien (6.1, 6.2) et **en ce qu'**au moins l'une des sections(S₁, S₂, S₃) provoque un étirage longitudinal des feuilles en matière plastique (9.1, 9.2) et/ou un étirage transversal des feuilles en matière plastique (9.1, 9.2).

13. Dispositif selon l'une quelconque des revendications 9 à 12, **caractérisé en ce que** les moyens de maintien (6.1, 6.2) sont guidés de manière synchrone dans les deux voies d'étirage (5.1, 5.2) par des systèmes d'entraînement séparés (7.1, 7.2).

14. Dispositif selon l'une quelconque des revendications 9 à 13, **caractérisé en ce que** les voies d'étirage (5.1, 5.2) sont agencées à l'intérieur d'un four (8).

15. Dispositif selon l'une quelconque des revendications 9 à 14, **caractérisé en ce que** les moyens de maintien (6.1, 6.2) guidés dans l'une des voies d'étirage (5.1, 5.2) présentent plusieurs points de serrage (17.1, 17.2) superposés.

16. Dispositif selon l'une quelconque des revendications 9 à 14, **caractérisé en ce que** les moyens de maintien (6.1, 6.2) guidés dans l'une des voies d'étirage (5.1, 5.2) présentent alternativement des points de serrage inférieurs et supérieurs (17.1, 17.2).
